Europäisches Patentamt

(19) European Patent Office

Office européen des brevets

(11) **EP 0 826 914 A1**

## (12) EUROPEAN PATENT APPLICATION
### published in accordance with Art. 158(3) EPC

(43) Date of publication:
04.03.1998 Bulletin 1998/10

(21) Application number: 96927206.1

(22) Date of filing: 20.08.1996

(51) Int. Cl.[6]: **F16K 17/02**

(86) International application number:
PCT/JP96/02325

(87) International publication number:
**WO 97/19284 (29.05.1997 Gazette 1997/23)**

(84) Designated Contracting States:
**BE DE FR GB IT**

(30) Priority: 24.11.1995 JP 305714/95

(71) Applicant:
**Shin Caterpillar Mitsubishi Ltd.**
**Tokyo 158 (JP)**

(72) Inventors:
• **SHIMADA, Yoshiyuki**
  **Hyogo 651-22 (JP)**
• **YOSHINO, Tetsuya**
  **Hyogo 674 (JP)**

(74) Representative:
**BATCHELLOR, KIRK & CO.**
**2 Pear Tree Court**
**Farringdon Road**
**London EC1R 0DS (GB)**

(54) **SOLENOID-ACTUATED PROPORTIONAL RELIEF VALVE**

(57) A solenoid-actuated pilot-operated proportional relief valve comprising an adapter (13) whose upper part includes a guide hole (31) along its axis, which vertically guides a needle (3) in tight contact. The adapter (13) further includes in its lower portion a positioning hole (32) bored coaxially with the needle guide hole (31). A seat (4) is fitted tightly into a positioning hole (33) bored coaxially with a seat member (5). The needle (3) is axially guided in close contact with the needle guide hole (31) in the adapter (13), while the seat (4) is kept in tight contact with the inner surface of the positioning hole (32) in the adapter (13). The lower end of the needle (3) sits well on the seat member (5) without partial contact thus preventing the hunting of the relief valve and the failure of rise in pressure due to the imperfect seating of the needle.

FIG. 1

EP 0 826 914 A1

## Description

### Technical Field

The present invention relates to a proportional control electromagnetic relief valve.

### Background Art

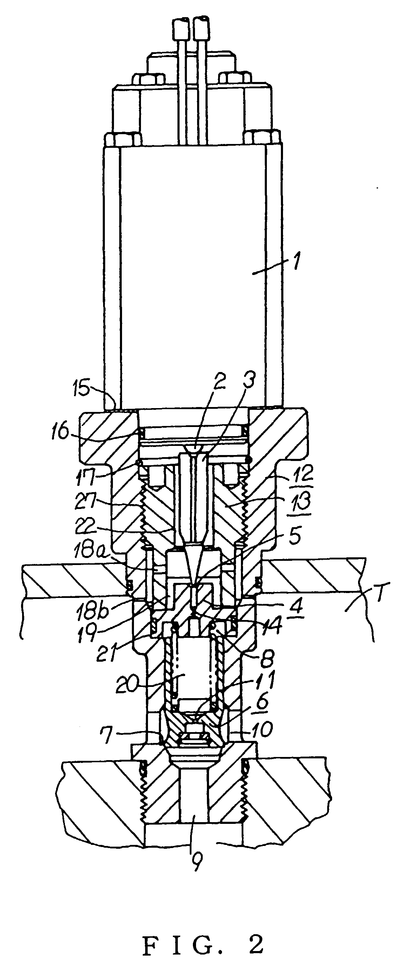

An actual example of conventional proportional control electromagnetic relief valves is shown in Fig. 2, wherein a proportional control electromagnetic solenoid 1 is attached to the upper part of a valve body 12, a needle 3 is disposed at the end of a push rod 2 which is moved by solenoid 1 in the axial direction, and a pilot stage seat portion 5 of a seat 4 fitted in valve body 12 is disposed at the end of needle 3.

A main poppet 6 which is capable of freely sliding in valve body 12 in the axial direction is disposed below seat 4. Main poppet 6 is constantly pushed against a main seat 7 by a return spring 8. Main seat 7 is located between an inlet port 9 and a tank port 10, which are both bored in the lower part of valve body 12 in such a manner that inlet port 9 and tank port 10 respectively extend in the axial direction and in the radial direction.

An orifice 11 is formed at the center of main poppet 6. An orifice 14 is formed at the center of the aforementioned seat 4, which is pushed and secured by an adapter 13 screwed in valve body 12.

Shims 15 are sandwiched between solenoid 1 and valve body 12 so that the operating distance of needle 3 with respect to that of push rod 2 can be adjusted by increasing or reducing the number of shims 15. Thus, the set pressure can be adjusted. The space between solenoid 1 and valve body 12 is kept fluid-tight by an O ring 16. The upper end of adapter 13 is held by a stop ring 17.

Conduit passages 18a and 18b are respectively bored through adapter 13 and valve body 12 so that the space located between seat 4 and adapter 13, i.e. the space extending in the radial direction, communicates to the outside of valve body 12, in other words the inside of a tank T, through these conduit passages 18a,18b. There is a space 19 between seat 4 and adapter 13, space 19 extending in the axial direction.

A seat inserting portion 21 for inserting and fitting seat 4 in a fluid tight state is formed on the inner face of main valve 12, at a location above a spring chamber 20 for fitting the aforementioned return spring 8. The inner wall of an axially extending hole bored through adapter 13 serves as a guide portion 22 for guiding needle 3.

Next, a working mechanism of the conventional proportional control electromagnetic relief valve described above is explained hereunder.

First of all, solenoid 1 pushes needle 3 through push rod 2 with a thrusting force $_{F1}$, which is in proportion to a current value I (ampere).

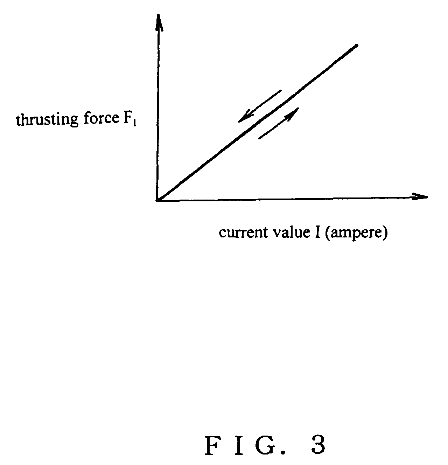

When push rod 2 pushes needle 3, thereby pressing the end of needle 3 against pilot stage seat portion 5 of seat 4, it is supposed that thrusting force $F_1$ and current value I are in the following proportional relationship as illustrated in Fig. 3:

$$F_1 = k_1 \cdot I \qquad (1)$$

wherein k1 is a proportional constant.

Now, $A_p$ represents the area receiving the pressure at the end of needle 3 fitted in seat portion 5 of seat 4, while Am represents the area of main poppet 6 which receives the pressure, both at the upstream side and downstream side of poppet 6 with respect to orifice 11. A preset load of return spring 8 is represented by $F_2$.

In cases where an inlet pressure $P_{IN}$ at inlet port 9 is lower than $F_1$/Ap, inlet pressure $P_{IN}$ and the pressure in spring chamber 20 are equal, because seat portion 5 is closed. Therefore, main poppet 6 is in the state where it is pushed against main seat portion 7 by spring 8, with a communicative passage between inlet port 9 and tank port 10 blocked.

When $P_{IN}$ increases to the state $P = = F_1 / A_p$ .....(2), needle 3 is pushed upward, thereby opening seat portion 5 so that pilot fluid flows from inlet port 9 through orifice 11, spring chamber 20, orifice 14 of seat 4 and then through conduit passages 18a,18b into tank T at pilot flow rate $Q_1$.

Granting that tank pressure is zero for the sake of convenience, the difference in pressure between the areas in front and rear of orifice 11, i. e. differential pressure ΔP represented by the following equation (3), is generated:

$$Q_1 = k_2 \cdot A_3 \cdot (\Delta P)^{1/2} \qquad (3)$$

wherein $k_2$ and $A_3$ respectively represent a proportional constant and a cross section of the aperture of orifice 11.

When the force with respect to the preset load of return spring 8 $(F_2)$ becomes $F_2 \leqq Am \cdot \Delta P$, main poppet 6 is pushed upward, thereby opening the passage between inlet port 9 and tank port 10 while maintaining the state represented by equation (2). In other words, inlet pressure $P_{IN}$ is set at a desired value by current value I in accordance with equations (1) and (2).

Further, seat 4 is fastened to the inner side of valve body 12 with a screw-in type adapter 13. There is a wide gap 19 between adapter 13 and seat 4.

A conventional proportional control electromagnetic relief valve described above has in adapter 13 a needle guide portion 22 in order to limit inclination of needle 3 in order to prevent pressure hunting and improper pressure rising resulting from improper seating, which may occur due to one-sided contact when the end of needle 3 is pushed by push rod 2 against seat portion 5.

The gap between guide portion 22 and needle 3 has to be kept down to a minimum. Otherwise, guide portion 22 would fail to function properly, permitting needle 3 to incline to a large degree.

According to the conventional configuration described above, however, it is unavoidable that the discrepancy between the respective axis centers of the inner diameter of guide portion 22 of adapter 13 and seat portion 5 of seat 4 (said discrepancy is hereinafter referred to as degree of coaxiality) is considerably large, because it is an accumulation of respective degrees of coaxiality of various members described below. Therefore, reducing the clearance between guide portion 22 and needle 3 to a small distance may produce a result opposite to what has been intended, in other words, it may cause the end of needle 3 to abut against only one side of seat portion 5, resulting in pressure hunting or improper pressure rising.

For this reason, the conventional configuration calls for a sufficiently wide clearance. As the guide portion consequently functions poorly, it presents the danger of needle 3 leaning to one side and abutting against only one side of seat portion 5, thereby causing pressure hunting or improper pressure rising.

The aforementioned accumulation of respective degrees of coaxiality of various members means (i) a degree of coaxiality between the end of needle 3 and the outer perimeter of needle 3, (ii) a degree of coaxiality between the inner diameter of guide portion 22 of adapter 13 and the outer threaded portion, (iii) a degree of coaxiality between an adapter-mounting threaded portion 27 of valve body 12 and a seat insertion portion 21 in which the outer surface of seat 4 is fitted, and (iv) a degree of coaxiality between seat portion 5 and the outer circumferential surface of seat 4. Coaxialities of (ii) and (iv) are especially prone to becoming aberrant.

In order to solve the above problems, an object of the present invention is to provide a pilot operated proportional control electromagnetic relief valve which calls for moving a needle in the axial direction by using an axial thrusting force generated in proportion to a current value of solenoid, said proportional control electromagnetic relief valve having a configuration such that the needle can be properly seated without the danger of the end of the needle being in contact with only one side of the seat portion, said proportional control electromagnetic relief valve therefore being capable of protecting the relief valve from such problems otherwise caused by improper seating as hunting or improper pressure rising.

Disclosure of Invention

The present invention comprises a pilot-operated proportional control electromagnetic relief valve including a seat having a seat portion so provided in the valve body as to face a needle, the seat pushed and fastened by a stopper which is screwed into the valve body, wherein a main poppet located between an inlet port of the valve body and a tank port of the valve body is controlled by means of moving the needle in the axial direction by an axial thrusting force generated in proportion to the value of electric current supplied to a solenoid attached to the valve body so that fluid flows through an orifice incorporated in the main poppet, said orifice located between the inlet port and the seat portion, and that the main poppet is controlled by the pressure difference between the parts in front of and behind the orifice, said proportional control electromagnetic relief valve characterized by including a needle guide portion bored in the upper part of the aforementioned stopper and snugly fitted around the outer surface of the needle so as to guide vertical movement of the needle, a cylindrical inner wall portion for positioning, which is so formed in the lower part of the stopper as to be coaxial with the needle guide portion, and a cylindrical outer wall portion for positioning, which is so formed around the outer surface of the aforementioned seat as to be coaxial with the seat portion of the seat and snugly fitted in the cylindrical inner wall portion. Because of the configuration wherein the cylindrical inner wall portion for positioning of the stopper and the cylindrical outer wall portion for positioning of the seat are snugly fitted together, the invention is capable of reducing the size of the gap between the needle and the stopper to a minimum, thereby limiting the possible inclination of the needle to a minimum range, and also capable of bringing the degree of coaxiality between the inner diameter of the needle guide portion and the seat portion of the seat into sufficiently close proximity, thereby preventing the end of the needle from coming into contact with only one side of the seat portion. Thus, the invention is effective in preventing pressure hunting and improper pressure rising, which are often caused by improper seating of the needle resulting from one-sided abutment of the needle.

Brief Description of Drawings

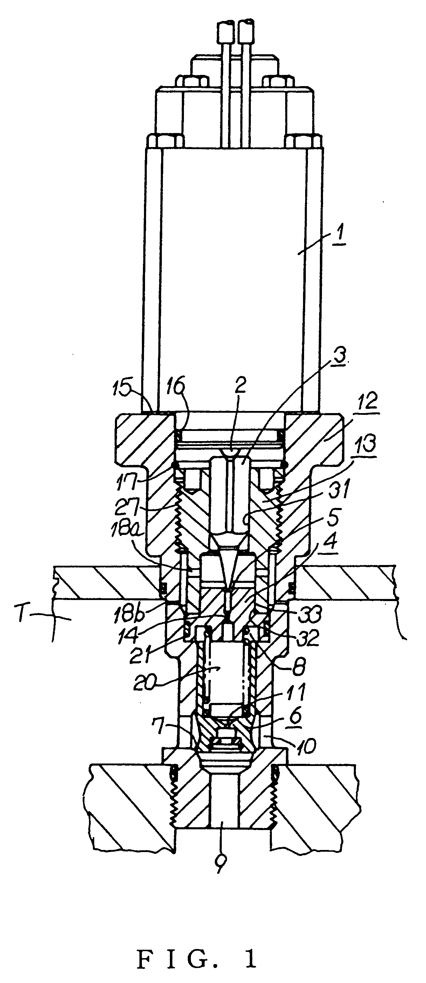

Fig. 1 is a sectional view of a proportional control electromagnetic relief valve according to an embodiment of the present invention; Fig. 2 is a sectional view of a conventional proportional control electromagnetic relief valve; and Fig. 3 is a characteristic graph showing the relationship between current values of said relief valve at its solenoid and thrusting forces.

Best Mode for Carrying Out the Invention

Next, the configuration of an embodiment of the invention is explained hereunder, referring to Fig. 1. The elements similar to those of the example of conventional valves shown in Fig. 2 are identified with the same reference numerals, of which explanation is omitted.

A needle guide portion 31 for guiding a needle 3 is bored in the upper part of an adapter 13 which serves as a stopper. More precisely, needle guide portion 31 is bored through the center of adapter 13 so as to be coaxial with adapter 13. Needle 3 is snugly fitted in needle guide portion 31 in such a manner as to be capable of moving up and down.

A cylindrical inner wall portion 32 for positioning is so bored in the lower part of adapter 13 by means of turning as to be coaxial with needle guide portion 31.

A cylindrical outer wall portion 33 for positioning to be snugly fitted in the aforementioned cylindrical inner wall portion 32 for positioning is so formed around the outer surface of seat 4 by means of turning as to be coaxial with pilot stage seat portion 5 at the center of seat 4.

While the outer circumferential surface of needle 3 is snugly fitted in needle guide portion 31 of adapter 13 so that needle guide portion 31 guides the axial travel of needle 3, cylindrical outer wall portion 33 for positioning of seat 4 is snugly fitted in cylindrical inner wall portion 32 for positioning of adapter 13.

With the configuration as above, the degree of coaxiality between the inner diameter of needle guide portion 31 and cylindrical inner wall portion 32 of adapter 13 is brought into as close proximity as possible, and the space between cylindrical inner wall portion 32 and cylindrical outer wall portion 33 is also reduced to a minimum. Therefore, according to the above configuration of the invention, the degree of coaxiality between the inner diameter of needle guide portion 31 of adapter 13 and seat portion 5 is substantially closer than that of a conventional valve.

In other words, because of the above configuration, which is free from influences of the aforementioned factors which are the principal causes of inaccuracy of the coaxiality in conventional products, namely the degree of coaxiality between the outer threaded portion of adapter 13 and the inner diameter of needle guide portion 31 and the degree of coaxiality between adapter-mounting threaded portion 27 of valve body 12 and seat insertion portion 21, the present invention is capable of reducing the size of the space between needle 3 and needle guide portion 31 to a minimum, thereby allowing needle guide portion 31 to perform the guiding function to the full extent.

As described above, by fitting cylindrical inner wall portion 32 of adapter 13 and cylindrical outer wall portion 33 of seat 4 snugly together, the invention is capable of reducing the size of the gap between needle 3 and needle guide portion 31 to a minimum, thereby limiting the possible inclination of needle 3 to a minimum range, and also capable of bringing the degree of coaxiality between the inner diameter of needle guide portion 31 and seat portion 5 of seat 4 into sufficiently close proximity, thereby preventing the end of needle 3 from coming into contact with only one side of seat portion 5. Thus, the invention is effective in preventing pressure hunting and improper pressure rising, which are often caused by improper seating of needle 3 resulting from one-sided abutment of needle 3 described above.

Industrial Applicability

A proportional control electromagnetic relief valve according to the present invention is suitable to be used for adjustable setting of pressure in a hydraulic circuit or the like to a desired value automatically or by means of remote control.

**Claims**

1. A pilot-operated proportional control electromagnetic relief valve including a seat having a seat portion so provided in a valve body as to face a needle, said seat pushed and fastened by a stopper which is screwed in said valve body, wherein a main poppet located between an inlet port of said valve body and a tank port of said valve body is controlled by means of moving said needle in the axial direction by an axial thrusting force generated in proportion to the value of electric current supplied to a solenoid attached to said valve body so that fluid flows through an orifice incorporated in said main poppet, said orifice located between said inlet port and said seat portion, and that said main poppet is controlled by the pressure difference between the parts in front of and behind said orifice, said proportional control electromagnetic relief valve characterized by including:

   a needle guide portion bored in the upper part of said stopper and snugly fitted around the outer surface of said needle so as to guide vertical movement of said needle; a cylindrical inner wall portion for positioning, which is so formed in the lower part of said stopper as to be coaxial with said needle guide portion, and a cylindrical outer wall portion for positioning, which is so formed around the outer surface of said seat as to be coaxial with said seat portion thereof and snugly fitted in said cylindrical inner wall portion.

F I G. 1

F I G. 2

thrusting force $F_l$

current value I (ampere)

FIG. 3

## INTERNATIONAL SEARCH REPORT

| International application No. |
|---|
| PCT/JP96/02325 |

**A. CLASSIFICATION OF SUBJECT MATTER**

Int. Cl$^6$   F16K17/02

According to International Patent Classification (IPC) or to both national classification and IPC

**B. FIELDS SEARCHED**

Minimum documentation searched (classification system followed by classification symbols)

Int. Cl$^6$   F16K17/02, F16K31/06

Documentation searched other than minimum documentation to the extent that such documents are included in the fields searched

| | |
|---|---|
| Jitsuyo Shinan Koho | 1926 – 1996 |
| Kokai Jitsuyo Shinan Koho | 1971 – 1996 |
| Toroku Jitsuyo Shinan Koho | 1994 – 1996 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 63-275865, A (Saginomiya Seisakusho K.K.), November 14, 1988 (14. 11. 88)(Family: none) | 1 |
| A | JP, 2-92174, U (Nippon Spindle Seizo K.K.), July 23, 1990 (23. 07. 90)(Family: none) | 1 |

☐ Further documents are listed in the continuation of Box C.          ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| November 12, 1996 (12. 11. 96) | November 19, 1996 (19. 11. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)